Europäisches Patentamt

European Patent Office

Office européen des brevets

(19)

(11) Publication number: **0 165 909 B1**

# EUROPEAN PATENT SPECIFICATION

(12)

(45) Date of publication of patent specification: **17.07.91**   (51) Int. Cl.5: **C09D 133/04**, C08F 220/00

(21) Application number: **85830117.9**

(22) Date of filing: **20.05.85**

(54) **Composition and process for coating a metal article with a protective pigmented polymeric layer by in situ redox polymerization.**

(30) Priority: **21.05.84 IT 6751084**

(43) Date of publication of application:
**27.12.85 Bulletin 85/52**

(45) Publication of the grant of the patent:
**17.07.91 Bulletin 91/29**

(84) Designated Contracting States:
**DE FR GB SE**

(56) References cited:
**EP-A- 0 012 134**

(73) Proprietor: **FIAT AUTO S.p.A.**
**Corso Giovanni Agnelli 200**
**I-10135 Torino(IT)**

(72) Inventor: **Bianco, Paolo**
**Via Borgomanero 28**
**I-10145 Torino(IT)**
Inventor: **Garlasco, Renzo**
**Baden Powell 8**
**I-10064 Pinerolo (Torino)(IT)**

(74) Representative: **Jacobacci, Filippo et al**
**c/o JACOBACCI-CASETTA & PERANI S.n.c.**
**Via Alfieri, 17**
**I-10121 Torino(IT)**

## Description

The present invention relates to a composition and a method for coating a metal article with a protective pigmented polymeric layer by redox polymerisation in situ.

More particularly, the invention relates to a composition according to the pre-characterizing portion of claim 1. EP-A-0012134 describes a composition of this kind, wherein the polymeric substance is a latex containing acidic functional groups and suffer from drawbacks in respect of the dispersability of the pigment and anti-corrosion properties.

U.K. Patent No. 1,155,497, U.S. Patent No. 3,685,617 and Italian Patent Applications Nos. 67119-A/78 and 67359-A/82 describe compositions of the type comprising, in aqueous solution, an acrylic monomer, a peroxide-type initiator and an acid or a salt for liberating metal ions from the surface of the article, the composition having a pH of from 6 to 0.5 and having a quantity of molecular oxygen dissolved therein as a polymerisation inhibitor.

Protective coatings polymerised by the in situ redox method, by immersion of a metal article in compositions of the type mentioned immediately above, are generally very satisfactory in terms of adhesion to the metal substrate, hardness, strength in bending tests and resistance to saline fog. However even if a pigment is included in the compositions mentioned above, it is not possible to form a pigmented polymerised polymeric coating on the metal article in situ. Consequently such coatings are suitable solely as undercoat in painting processes whereby it is generally necessary, in industry, to apply a second layer by conventional painting techniques to obtain a finished, painted article.

Compositions are also known from the Patent literature, for example from European Patent No. 26,664 and European Patent No. 32,297, which autodeposit on the surface of a metal object immersed therein without an electrical potential, and which are constituted by an emulsion or a dispersion of saturated polymers, preferably for example styrene- butadiene latex, polyvinyl chloride acrylic polymers and polyethylene, including an acid, fluoride ions and an oxidising agent such as $H_2O_2$, $K_2Cr_2O_7$, and/or persulphate ions. The mechanism for the deposition of the coating layer which is common to these compositions, which may include a pigment so as to allow a pigmented coating to be obtained, is simply that of coagulation of the polymer. In fact the metal ions generated by corrosion of the substrate due to the high $H^+$ concentration and the presence of oxidants, increase the ionic potential at the metal-solution interface considerably and cause the polymer to coagulate and form the film. Coatings obtained with the use of these compositions however do not adhere well to the metal substrate, have weak cohesion and poor resistance to rinsing with water.

Cataphoretic processes are also known for coating metal articles by immersion and these use baths including polymers which are dispersible or soluble at acid pHs and which may have acrylic functional groups. These processes however are clearly expensive from an energy point of view since they require an electrical potential to be applied to achieve the electrophoretic migration and precipitation of the polymer on the metal substrate. Furthermore, the possible presence of acrylic functional groups in the polymer means that the cross-linking of the film can only be achieved in a subsequent process, under the effect of heat or ultra violet radiation, so much so that, if a test piece coated with a cataphoretically-deposited film which has not been cross-linked in an oven is washed with a solvent for the polymer, the polymer is easily dissolved leaving the sheet metal bare.

In view of the deficiencies and disadvantages of the prior art, the object of the present invention is to provide a composition and a method which allow the deposition and simultaneous cross-linking of a protective pigmented polymeric coating on metal articles, by simple immersion of the article in the composition, without an electrical potential.

One subject of the present invention is thus a composition according to the characterizing portion of Claim 1.

The prepolymer has acrylic- or methacrylic-type unsaturation of the order of 0.05 to 15 equivalents per kg of prepolymer and is present in quantities of the order of 0.5 to 25% by weight, more preferably from 5 to 15% by weight, with reference to the weight of the composition.

In order to allow its dissolution or dispersion in water at a pH of between 0.5 and 6, the prepolymer must have cationic functional groups such as primary, secondary or tertiary amine groups, ammonium, sulphonium, phosphonium, oxazolidine ions or Mannich bases; the functional groups being present in quantities of the order of 0.05 to 10 equivalents per kg of prepolymer.

The prepolymer may also, optionally, have other functional groups which can cause an increase in the degree of cross-linking during subsequent drying or interaction with any subsequent paint layer, whenever its application is desirable. Functional groups suitable for this purpose are, for example, blocked isocyanate groups, epoxy groups, series of siccative fatty acids and allyl derivatives.

Prepolymers which are dispersible and/or soluble at acid pH and which are suitable for use in the composition according to the invention are known and available commercially. For example, prepolymers for use in cathode electrophoresis may be employed, such as those described in the review: "The Chemistry of Binders for Electrodeposition" by H.U. Shenck et al., in Progress inorganic coating, 7 (1979) pages 57 to 77. The synthesis of prepolymers which are dispersible in water and have acrylic functional groups suitable for use in the composition is also described, for example, in U.S.Patents Nos. 4,252,734, 4,166,017 and 4,130,522, with reference to coatings which can be deposited by electrophoresis and cross-linked by radiation.

In the experimental tests which will be described below, there were used for the compositions according to the invention, with suitable results, prepolymers derived from epoxy resins, acrylic resins, butadiene resins and polyester resins, modified by the introduction of acrylic or methacrylic unsaturation and functional groups adapted to make them dispersible or soluble in water.

The pigments and/or fillers usable are acidic and chosen from the group: aluminium silicate, kaolin, silica, mica, titanium dioxide, carbon black, iron oxides and anti-corrosive pigments such as lead silicate, lead silico chromate and mixtures thereof. Moreover basic fillers and pigments such as calcium carbonate, alumina, zinc oxide, zinc sulphide, basic lead carbonate and sulphate and metal powders, cannot be used in the composition according to the invention since they are subject to flocculation or decomposition in the acid environment. The concentration of the pigments is typically from 0.1 to 20% by weight, preferably from 1 to 10% by weight, with reference to the weight of the composition.

The water-soluble acrylic monomer is preferably an acrylic ester of a polyvalent alcohol such as glycerine, ethylene glycol or butane diol, with a low volatility. It is preferably chosen from the group constituted by 2-hydroxyethyl acrylate, 2-hydroxypropyl acrylate, 3-hydroxypropyl acrylate, 4-hydroxybutyl acrylate, 5-hydroxypentyl acrylate, 6-hydroxyhexyl acrylate, 3-propoxy-2-hydroxypropyl acrylate and 3-propionyloxy-2-hydroxypropyl acrylate and mixtures thereof. The concentration of the monomer (or of several such monomers if used simultaneously) may be chosen within wide limits, generally from 0.5% to 25% by weight, preferably from 2 to 10 percent by weight.

In addition to the hydroxyalkyl esters mentioned above other acrylic monomers may be used, such as acrylic acid, methacrylic acid, acrylonitrile, methacrylonitrile, acrylamide, n-2-oxobutyl acrylamide. It is however preferable that these monomers should not be used alone, or as a principal monomer, but rather used in combination with a hydroxyalkyl-ester of the type mentioned above. For example the acrylic acid may be used conveniently in combination with 4-hydroxybutyl acrylate since the copolymers thus obtained are less hydrophilic compared with the homopolymer and thus yield protective films which are more resistant to washing with water.

In the case in which the acrylic unsaturation content of the prepolymer should be low, with a view to improving the anti-corrosive characteristics of the coating, by increasing the degree of cross-linking, it may be appropriate to add to the composition bifunctional monomer cross-linking agents in concentrations of 0.1 to 5% by weight. Suitable cross-linking comonomers are for example butanediol diacrylate, hexamethylene diacrylate, tetramethylene diacrylate and diacrylates of polyethylene glycols. The cross-linking comonomers may however already be present in the mono-functional monomer as an inherent impurity, since the mono-functional monomers used are generally of industrial grade.

The acids which serve to neutralise the prepolymer and to keep the pH of the composition within the range 0.5 to 6, preferably 2 to 4, and which also serve to liberate metal ions from the surface of the article, may be strong inorganic acids such as sulphuric acid and phosphoric acid or inorganic acids such as formic, acetic, propionic, acrylic and methacrylic acids and hemiesters of maleic,fumaric, succinic, oxalic and malonic acids. The concentration of the acid in the composition must, however, be greater than the concentration needed to neutralise the amine groups in the prepolymer.

It is particularly advantageous to add p-toluenesulphonic acid to the composition in concentrations of 0.01 to 0.5% by weight since this results in an increase in the yield from the deposition process, probably because of its catalytic activity towards peroxides.

As salts there may be used, for example, $CuCl_2$, $FeCl_3$ or $AgNO_3$, generally in concentrations of no more than 1% by weight.

Since the ionic force plays an important role in the dispersion of the prepolymers, it is not always possible to use alkaline peroxydisulphates, suggested by the prior art, as the peroxy initiators since they may cause the resin to coagulate. Hence water-soluble organic peroxides, such as tert-butyl hydroperoxide, 2-butanone peroxide and cumene hydroperoxide, in concentrations of from 0.05 to 2% by weight, are preferably used.

In order to improve the dispersion of the prepolymer and the subsequent relaxation of the polymeric coating film, it is advantageous to use co-solvents in concentrations of up to 20% by weight and preferably from 2 to 8%. Such co-solvents, which must, in any case, be stable to oxidation, may be used alone or in mixtures and are preferably chosen from the group comprising isopropanol, butanol, 2-ethylhexanol, 2-ethoxyethanol (cellosolve-R.T.M.) 2-butoxyethanol (butylcellosolve-R.T.M.), and 2-ethoxyethyl acetate (cellosolve acetate-R.T.M.).

In order to prepare the composition, the prepolymer and the pigments are preferably first made into a paste. For this purpose the prepolymer is neutralised with acid and then diluted with water and possibly with a mixture of co-solvents. The paste obtained is then mixed with the pigments, with the use of a Sussmeyer mill. The dispersion thus obtained is then introduced into the vessel in which it is diluted with water and the monomer and the initiator are added. The pH of the composition is then adjusted until the desired value is achieved.

A further subject of the present invention is a method for coating a metal article with a pigmented polymeric layer by means of redox polymerisation in situ, the method comprising the operation of immersing the article to be coated in the composition described above.

Preferably,as already described in Italian patent application no. 67359-A/82, the composition constituting the bath is circulated through a separate oxygenation zone into which molecular oxygen or air is blown or bubbled, the rate of circulation and the supply of oxygen or air being regulated so that the composition has a constant dissolved-oxygen content of at least 4 ppm.

The circulation of the composition together with the presence of the prepolymer maintains the pigment in dispersion, preventing its sedimentation. Furthermore the oxygenation of the composition under recycle conditions ensures the stability of the composition, preventing bulk polymerisation.

The method is preferably carried out with the temperature of the composition kept between about 10° C and about 30° C, more preferably at 20-25° C.

The metal articles to be coated are typically of ferrous material, particularly steel, but may also be of another metal (for example copper) or an alloy, as taught by the prior art. The term "ferrous material" also includes surfaces modified chemically for anti-corrosive purposes, particularly phosphated surfaces. In this case the pH of the solution should be less than 3, phosphoric acid preferably being used.

The method is carried out by immersing the article to be coated for a period typically of 2 to 3 minutes. It has been found that, with the use of the composition according to the invention, the thickness of the pigmented coating films obtained is greater than the thickness of coatings obtainable by the prior art for the same immersion time. The pigmented coating obtainable by the present method is already cross-linked and has good mechanical characteristics whereby it is not necessary to apply a further layer of paint in accordance with conventional methods in order to obtain a finished painted product.

For a fuller description of the method carried out under "refill" conditions and of the plant for carrying out the method the reader is referred to the text of Italian patent no. 67359-A/82.

Example 1

The experimental tests were carried out with the use of laboratory apparatus having a solution capacity of two litres and a separate small oxygenation cell with a circulation pump and ejector. The test pieces to be coated were mild steel sheets having a size of 150 x 70 x 0.8 mm.

An unsaturated epoxy resin with an amine content of 1.42 equivalents/kg dry weight, obtained by the process given below, was used as the prepolymer.

380 g of the polyglycidyl ether of bisphenol A (Epikote 828, equivalent epoxy weight 190) were placed in a 2 litre reactor and diluted with 300 g of cellosolve acetate to which 10 g of hydroquinone monomethyl ether, 2 g of tetraethylammonium iodide and 428 g of 2-acryloxyethyl-H-maleate (obtained by the reaction of equimolecular quantities of maleic anhydride and 2-hydroxyethyl acrylate) had been added. After 4 hours at a temperature of from 130 to 140° C, the acid value had fallen to 3 mg KOH/g. 348 g of toluylene di-isocyanate(80/20 mixture of the 2,4 and 2,6 isomers) diluted with 200 g of cellosolve acetate were introduced into a second reactor and 238 g of N,N-diethylethanolamine were added under anhydrous nitrogen, with agitation and cooling, the temperature being kept below 30° C. The isocyanate group content of this product was about 10.5%. The epoxy ester obtained in the first reactor was then cooled to about 75° C and then 2 ml of dibutyl tin dilaurate and the reaction product obtained in the second reactor were added. The final product, 73% by weight in cellosolve acetate, had an amine content of 1.42 equivalents/kg dry weight (prepolymer A).

350 g of prepolymer A were neutralised with 24 ml of 85% by weight, $H_3PO_4$, diluted with 50 ml of 2-butoxyethanol and 200 ml of water. 50 g of ASP 100 kaolin and 4 g of LT carbon black were then added, the mixture being homogenised in a Sussmayer mill for 1 hour. The dispersion obtained was transferred into a test tank with an added 60g of 4-hydroxybutyl acrylate, diluted to 2 litres and 2.2 ml of t-butyl

4

hydroperoxide were added.

The percentage by weight concentrations of the individual components of the composition according to the invention were as follows:

```
Composition 1
Resin A                           12.7%
Pigment (kaolin/carbon black
in 12.5/1 ratio)                  2.7%
4-hydroxybutyl acrylate           3.0%
t-butyl hydroperoxide             0.11%
phosphoric acid                   1.0%
2-butoxyethanol                   2.7%
Cellosolve acetate                4.8%
pH                                2.9
Bath temperature                  18°C
```

In all the tests carried out in the present example and in the following examples, the oxygenation cell gave a dissolved-oxygen content equal to the saturation value at the test temperature. The test pieces were immersed in the composition then washed with water and dried in an oven at 180°C for 30 minutes. The coating yield was tabulated as a function of time and is given in Table I. After each test, at least one test piece was washed with water then immersed in a solvent for the prepolymer (tetrahydrofuran) to check for in situ polymerisation and cross-linking. In all the tests given in the examples, the treatment with solvent did not result in the film being dissolved.

After drying in an oven for 30 minutes at 180°C, each test piece was then subjected to an adhesion and bending test, an impact test and a test for resistance to corrosion by exposure to saline fog. The results of these tests are given for all the examples in Table II, together with values for the coating yield after 2 minutes of immersion.

Example 1B

Example 1 was repeated with the introduction of 1g of p-toluenesulphonic acid into the composition, this not giving any substantial variation in the pH, but increasing the yield of the process. The coating yield is given in Table I.

Comparative Example

The prepolymers used in the composition according to the present invention do not result in the formation of polymeric films in the presence solely of the peroxy initiator. However the presence of the monomer in the composition may make one suspect that the prepolymer remains "trapped" in the film being formed.

In order to evaluate the effective interaction between the prepolymer and the polymeric film made in situ, a composition was prepared in which the monomer was constituted by acrylic acid. If the resin were not involved in the polymerisation process, a film would not be formed since the homopolymer of acrylic acid is soluble in the composition and cannot be cross linked. The percentage concentration by weight of the components of the reference composition was as follows:

| | |
|---|---|
| Prepolymer A (Example 1) | 6.0% |
| Cellosolve acetate | 4.0% |
| Acrylic acid | 3.0% |
| t-butyl hydroperoxide | 0.17% |
| pH | 3.5 |
| Bath temperature | 18°C |

Although the speed of formation of the film was very slow, an extremely cross-linked, thin film was obtained. To confirm the occurrence of cross linking, the coated test piece was immersed in tetrahydrofuran without the film dissolving. The coating yield is given in Table I as a function of the immersion time.

The test was repeated with the use of the reference composition given above but without the use of the acrylic monomer;in this case no film formed on the test piece immersed on the composition.

Table I

| Immersion time (seconds) | Yield Example 1 | Example 1B | Comparative Example |
|---|---|---|---|
| 15 | 10.0 | 10.5 | – |
| 30 | 12.2 | 13.8 | – |
| 60 | 16.8 | 18.1 | 6.8 |
| 120 | 21.5 | 23.4 | 8.5 |
| 180 | 26.5 | 27.5 | – |
| 240 | 27.3 | 28.9 | – |
| 300 | – | – | 11.6 |

Example 2.

An unsaturated prepolymer having an amine content of 0.91 equivalents/kg dry weight was used.

For the preparation of the prepolymer, 500 g of the polyglycidyl ether of bisphenol A (DER 671, equivalent epoxy weight ±99) were introduced into a two litre reactor and were dissolved in 350 ml of cellosolve acetate to which 73 g of diethylamine were added, the temperature being kept at 60-70° C until the IR peak at about 920 cm$^{-1}$ attributed to the oxiran ring had disappeared. 2 ml of dibutyl tin dilaurate and two isocyanate derivates were then added,the first being obtained by the addition of 166 g of 2-hydroxyethyl acrylate to 174g of toluylene di-isocyanate and 100 ml of cellosolve acetate at a temperature below 50° C. The second isocyanate was obtained by the addition of 45g of cellosolve to 87g of toluylene di-isocyanate and 50 ml of cellosolve acetate. The final product (prepolymer B) had a dry residue of 67%.

300 g of the prepolymer B were neutralised with 15 ml of H$_3$PO$_4$ (85% by weight) and 1 g of p-toluene-sulphonic acid, diluted with 100 ml of water and mixed with 86 g of TiO$_2$, 13 g of kaolin and 1g of carbon black. After grinding in a sand mill, the dispersion was transferred to the test apparatus and 100 g of 4-hydroxybutyl acrylate were added with 10 g of tetraethylene glycol diacrylate, and 5 ml of t-butyl hydroperoxide, and the contents were then diluted to 2 litres.

The percentage concentration by weight of the components of the composition according to the invention were as follows:

Composition 2

| | |
|---|---|
| Prepolymer B | 9.95% |
| Pigment (TiO$_2$, kaolin, carbon black) | 5.0% |
| 4-hydroxybutyl acrylate | 5.0% |
| Tetraethylene glycol diacrylate | 0.5% |
| Cellosolve acetate | 4.8% |
| Phosphoric Acid | 0.64% |
| p-toluene sulphonic acid | 0.05% |
| Tert-butyl hydroperoxide | 0.2% |
| pH | 2.2 |
| Bath temperature | 25$^{\circ}$C |

The results of the coating process are given in Table II.

Example 3

An unsaturated prepolymer was used for this test which was obtained by the method given below from an acrylic resin and had an amino functional group content of 1.07 equivalents/kg dry weight. 200 g of cellosolve acetate and 4 g of azo-bis-isobutyronitrile and 5 g of dodecyl mercaptan were introduced into a two litre reactor provided with an agitator, a dropping funnel, a reflux condenser and an anhydrous nitrogen flow and brought to a temperature of 70$^{\circ}$C. Over a period of 1.5 hours a mixture was added which consisted of 166 g of ethyl acrylate, 75 g of 2-hydroxyethyl acrylate, 166 g of N,N-diethylaminoethyl acrylate and 2 g of azo-bis-isobutyronitrile. Over the subsequent 2 hours, a further 2 aliquots each comprising 2 g of initiator were added, the system being kept at about 80$^{\circ}$C. There were then introduced at 70$^{\circ}$C, one ml of dibutyl tin dilaurate and the solution of a suitable isocyanate obtained by the addition of 37.4 g of 2-hydroxyethyl acrylate and 28.8 g of 2-ethoxyethanol to 112.2 g of toluylene di-isocyanate and 100 g of cellosolve acetate. A final product was obtained comprising 66% dry weight in cellosolve acetate (prepolymer C).

300 g of the prepolymer C were neutralised with 22 ml of H$_3$PO$_4$ (85% by weight) in 100 ml of water to which 100 ml of butyl cellosolve and 30 g of red oxide were added. After grinding in a mill, the dispersion obtained was introduced into the test apparatus with the addition of 1g of p-toluenesulphonic acid, 60g of 4-hydroxybutyl acrylate and 4.4 ml of t-butyl hydroperoxide, the volume then being brought to 2 litres. The percentage concentration by weight of the components of the composition according to the invention was as follows:

Composition 3

| | |
|---|---|
| Prepolymer C | 10.0% |

| | |
|---|---|
| Pigment (Red Oxide) | 1.5% |
| 4-hydroxybutyl acrylate | 3.0% |
| t-butyl hydroperoxide | 0.2% |
| Phosphoric Acid | 0.94% |
| p-toluenesulphonic acid | 0.05% |
| Butyl cellosolve | 5.0% |
| Cellosolve acetate | 4.8% |
| pH | 2.65 |

The results of the tests are given in Table II. The test was repeated with the use of test pieces phosphated with Protex 75, a coating yield being obtained after 2 minutes of immersion, washing and drying at 180° C, of 51.5 g/m².

Example 4

An unsaturated prepolymer was used for the test which was obtained from a polybutadiene epoxy resin (equivalent epoxy weight 256), with functional groups added by the "Michael" reaction with 2-aminoethanol (0.5 moles per equivalent of polybutadiene epoxy resin) and hexamethylene diacrylate (0.5 moles per equivalent of polybutadiene epoxy resin).

The prepolymer obtained (prepolymer D) had an amine content of 1.08 equivalents/kg of dry prepolymer.

87 g of the prepolymer D (50 g dry weight) were neutralised with 3.7 ml of formic acid in 25 ml of water and 50 g of a pigment constituted by red 140 were added. The mixture was ground in a Sussmeyer mill and then introduced into the test apparatus.

An emulsion IVI 542005, available commercially and constituted by unsaturated cataphoretic resins, and an unsaturated prepolymer (prepolymer E) having an amine content of 0.91 equivalents/kg were also introduced into the composition for coating the metal test pieces.

The prepolymer E was made in accordance with the method described in Example 1 by reaction of an epoxy resin Epikote 828 with 2-acryloxy-H-maleate (one equivalent/mole of Epikote) and 2(N,N-diethylaminoethyl) (3-isocyanate-4-methylphenyl) carbamate (0.5 moles/equilavent of Epikote).

The composition prepared for the coating of the test pieces in the test apparatus had the following percentage concentrations by weight of the components in 2 litres of water.

| | |
|---|---|
| Composition 4 | |
| Prepolymer D | 2.5% |
| Pigments | 2.5% |
| Emulsion IVI 542005 15.3% equal to prepolymer | 9.8% |
| Prepolymer E | 3.6% |
| Butyl cellosolve | 2.0% |
| Formic Acid | 1.05% |
| Cellosolve acetate | 2.0% |
| 4-hydroxybutyl acrylate | 4.0% |
| Tert-butyl hydroperoxide | 0.2% |
| pH | 3.4 |
| Bath Temperature | 26°C |

The characteristics of the coating are given in Table II.

Example 5.

The prepolymer used for the composition according to the invention was made from an epoxy ester of Epikote 828 and 2-acryloxyethyl-H-maleate(one mole/equivalent Epikote) at 66% in cellosolve acetate. Functional groups were added to the epoxy ester by reaction with 2-(N,N-diethylaminoethyl) (3-isocyanate-4-methylphenyl) carbamate (0.6 moles/hydroxy equivalent of epoxy ester). The prepolymer obtained (prepolymer F) had an amine content of 1.07 equivalents/kg.

200 g of prepolymer F were neutralised with 17 ml of phosphoric acid in 150 ml of water and the pigmented paste was then prepared in a mill by the addition of titanium dioxide (86g), kaolin ASP 100 (13.2g) and LT carbon black (0.8g).

The composition prepared for coating the test pieces in the test apparatus had the following percentage concentration by weight of the components in 2 litres of water.

```
Composition 5

Prepolymer F                      10.0%

Pigments                .          5.0%

4-hydroxybutyl acrylate           5.0%

Butyl cellosolve                  2.5%

Cellosolve acetate                6.7%

Phosphoric acid                   0.6%

Tert-butyl hydroperoxide          0.2%

Surfinol E 104                    0.015%

p-toluenesulphonic   acid         0.05%

pH                                2.6

Bath temperature                  20°C
```

The characteristics of the coating are given in Table II.

Example 6

A grey cataphoresis emulsion, available commercially and produced by IVI, was used for the test, and.included a prepolymer having acrylic functional groups in quantities of the order of more than 1 equivalent/kg and pigments. A pigmented paste IVI 542604, also available commercially, was also introduced into the composition.

The concentration of the components in the composition according to the invention were as follows:

```
Composition 6

Pigmented paste IVI 542604 14.6% )             ( prepolymers 12.1%
                                   } equal to {
Emulsion        IVI 542005 14.0% )             ( pigments     7.3%

formic acid                       0.5%

hexamethylene tetramine           0.01%

Tert-butyl hydroperoxide          0.2%

pH                                4.4

Bath Temperature                  21°C.
```

The characteristics of the coating are given in Table II.

Table II

| Example No. | 1 | 1B | 2 | 3 | 4 | 5 | 6 |
|---|---|---|---|---|---|---|---|
| Yield after 2' of immersion (g/m$^2$) | 21.5 | 23.4 | 41.9 | 49.5 | 29.7 | 38.0 | 35.1 |
| Exposure to saline fog (hours) | 400 | 400 | 300 | 200 | 650 | 350 | 350 |
| Impact | Moderate | Moderate | Moderate | Moderate | Moderate | good | Moderate |
| Adhesion and bending | good | good | good | moderate | good | good | very good |

## Claims

1. An acidic aqueous composition for coating a metal article with a protective pigmented polymeric layer by redox polymerisation in situ, comprising at least one monofunctional acrylic monomer, a peroxide

10

type initiator, an acid or a salt for liberating metal ions from the surface of the article, a pigment and a polymeric substance, characterised in that the composition has a pH of from 6 to 0.5 and a quantity of molecular oxygen dissolved therein to act as a polymerisation inhibitor, said polymeric substance includes at least one unsaturated prepolymer which is soluble or dispersible in the aqueous solution, said prepolymer having acrylic or methacrylic unsaturation of the order of 0.05 to 15 equivalents/kg of prepolymer and one or more types of cationic functional groups selected from the group consisting of primary amino, secondary amino, tertiary amino, ammonium, sulphonium and oxazolidine groups and Mannich bases, in quantities of the order of 0.05 to 10 equivalents/kg of prepolymer, said prepolymer being present at a concentration of from 0.5 to 25% by weight with reference to the weight of the composition.

2. Composition according to Claim 1, in which the prepolymer is present in quantities of the order of 5 to 15% by weight with reference to the weight of the composition.

3. Composition according to any one of the preceding. claims, in which the prepolymer has a further type of functional group selected from the group constituted by blocked isocyanates, epoxides, series of siccative fatty acids, allyl derivatives.

4. Composition according to any one of the preceding claims, in which the pigment is an acid pigment selected from the group constituted by aluminium silicate, kaolin, silica, mica, titanium dioxide, carbon black, iron oxides and mixtures thereof, and is present in quantities of the order of 0.1 to 20% by weight, preferably from 1 to 10% by weight, with reference to the weight of the composition.

5. Composition according to any one of the preceding claims, in which the peroxide initiator is a water-soluble organic peroxide.

6. Composition according to Claim 5, in which the peroxide initiator is selected from the group consisting of tert-butyl hydroperoxide, 2-butanone peroxide and cumene hydroperoxide, in concentrations of from 0.05 to 2% by weight with reference to the weight of the composition.

7. Composition according to any one of the preceding claims, in which the water-soluble acrylic monomer is selected from the group constituted by: 2-hydroxyethyl acrylate, 2-hydroxypropyl· acrylate, 3-hydroxypropyl acrylate, 4-hydroxybutyl acrylate, 5-hydroxypentyl acrylate, 6-hydroxyhexyl acrylate, 3-propoxy-2-hydroxypropyl acrylate and 3-propionyloxy-2-hydroxypropyl acrylate, in concentrations of from 0.5 to 25% by weight with reference to the weight of the composition.

8. Composition according to any one of the preceding claims, which also includes a cross-linking comonomer selected from the group constituted by:butanediol diacrylate, hexamethylene diacrylate, tetramethylene diacrylate, diacrylates of poly (ethylene-glycol), in concentrations of from 0.1 to 5% by weight with reference to the weight of the composition.

9. Composition according to any one of the preceding claims, characterised in that it has a dissolved molecular oxygen content of at least 4 ppm and up to saturation.

10. Composition according to any one of the preceding claims, in which the metal-ion liberating acid is selected from the group of acetic acid, acrylic acid, p-toluenesulphonic acid, sulphuric acid, phosphoric acid, formic, acetic, propionic, acrylic, methacrylic acids, hemiesters of maleic, fumaric, succinic, oxalic and malonic acids.

11. Composition according to Claim 10, in which the metal-ion liberating acid is p-toluenesulphonic acid in concentratations of from 0.01 to 0.5% by weight with reference to the weight of the composition.

12. Composition according to any one of the preceding claims, characterised in that it has a pH of from 2 to 4.

13. Composition according to any one of the preceding claims, in which it also includes a co-solvent selected from the group comprising isopropanol, butanol, 2-ethylhexanol, 2-ethoxyethanol, 2-butoxyethanol and 2-ethoxyethyl acetate.

**14.** Method for coating a metal article with a protective, pigmented polymeric layer by redox polymerisation in situ, characterised in that it includes the operation of immersing the article to be coated in a composition according to any one of the preceding claims for a time sufficient for the auto-deposition of a coating of a desired thickness on the surface of the metal article.

**15.** Method according to Claim 14, in which the composition is circulated through a separate oxygenation zone into which molecular oxygen is blown or bubbled, the rate of circulation and the oxygen supply being adjusted so that the composition has a constant dissolved-oxygen content of at least 4 ppm.

**16.** Method according to Claim 14 or Claim 15, in which the surface to be coated is of ferrous, possibly phosphated, material.

## Revendications

**1.** Une composition aqueuse acide pour revêtir un article métallique avec une couche polymère pigmentée protectrice par polymérisation redox in situ, comprenant au moins un monomère acrylique monofonctionnel, un inducteur du type peroxyde, un acide ou un sel pour libérer des ions métalliques à partir de la surface de l'article, un pigment et une substance polymère, caractérisée en ce que la composition a un pH de 6 à 0,5 et contient une quantité d'oxygène moléculaire dissous telle qu'il agisse comme inhibiteur de polymérisation, ladite substance polymère comprend au moins un prépolymère non saturé qui est soluble ou dispersable dans la solution aqueuse, ledit prépolymère ayant une insaturation acrylique ou méthacrylique de l'ordre de 0,05 à 15 équivalents/kg de prépolymère et un ou plusieurs types de groupes fonctionnels cationiques choisis parmi les groupes amino primaires, secondaires ou tertiaires, les ions ammonium, sulfonium, phosphonium et les groupes oxazolidine et les bases de Mannich, en quantités de l'ordre de 0,05 à 10 équivalents/kg de prépolymère, ledit prépolymère étant présent à une concentration de 0,5 à 25 % en poids par rapport au poids de la composition.

**2.** Composition selon la revendication 1, dans laquelle le prépolymère est présent en quantités de l'ordre de 5 à 15% en poids, par rapport au poids de la composition.

**3.** Composition selon l'une quelconque des revendications précédentes, dans laquelle le prépolymère contient un autre type de groupe fonctionnel choisi parmi les isocyanates bloqués, les époxydes, la série des acides gras siccatifs et les dérivés allyliques.

**4.** Composition selon l'une quelconque des revendications précédentes, dans laquelle le pigment est un pigment acide choisi dans le groupe suivant : silicate d'aluminium, kaolin, silice, mica, dioxyde de titane, noir de carbone, oxydes de fer et leurs mélanges et il est présent en quantités de l'ordre de 0,1 à 20 % en poids, de préférence de 1 à 10 % en poids, par rapport au poids de la composition.

**5.** Composition selon l'une quelconque des revendications précédentes, dans laquelle l'inducteur du type peroxyde est un peroxyde organique soluble dans l'eau.

**6.** Composition selon la revendication 5, dans laquelle l'inducteur du type peroxyde est choisi parmi l'hydroperoxyde de tert-butyle, le peroxyde de 2-butanone et l'hydroperoxyde de cumène, à des concentrations de 0,05 à 2 % en poids par rapport au poids de la composition.

**7.** Composition selon l'une quelconque des revendications précédentes, dans laquelle le monomère acrylique soluble dans l'eau est choisi parmi l'acrylate de 2-hydroxyéthyle, l'acrylate de 2-hydroxypropyle, l'acrylate de 3-hydroxypropyle, l'acrylate de 4-hydroxybutyle, l'acrylate de 5-hydroxypentyle, l'acrylate de 6-hydroxyhexyle, l'acrylate de 3-propoxy-2-hydroxypropyle et l'acrylate de 3-propionyloxy-2-hydroxypropyle, à des concentrations de 0,5 à 25 % en poids, par rapport au poids de la composition.

**8.** Composition selon l'une quelconque des revendications précédentes, qui contient également un comonomère réticulant choisi parmi le diacrylate de butanediol, le diacrylate d'hexaméthylène, le diacrylate de tétraméthylène et les diacrylates de polyéthylèneglycols, à des concentrations de 0,1 à 5 % en poids, par rapport au poids de la composition.

9. Composition selon l'une quelconque des revendications précédentes, caractérisée en ce qu'elle a une teneur en oxygène moléculaire dissous allant d'au moins 4 ppm jusqu'à la saturation.

10. Composition selon l'une quelconque des revendications précédentes, dans laquelle l'acide libérant des ions métalliques est choisi parmi l'acide acétique, l'acide acrylique, l'acide p-toluènesulfonique, l'acide sulfurique, l'acide phosphorique, l'acide formique, l'acide acétique, l'acide propionique, l'acide acrylique, l'acide méthacrylique et les hémiesters d'acides maléique, fumarique, succinique, oxalique et malonique.

11. Composition selon la revendication 10, dans laquelle l'acide libérant les ions métalliques est l'acide p-toluènesulfonique à des concentrations de 0,01 à 0,5 % en poids, par rapport au poids de la composition.

12. Composition selon l'une quelconque des revendications précédentes, caractérisée en ce qu'elle a un pH de 2 à 4.

13. Composition selon l'une quelconque des revendications précédentes, qui contient également un cosolvant choisi parmi l'isopropanol, le butanol, le 2-éthylhexanol, le 2-éthoxyéthanol, le 2-butoxyéthanol et l'acétate de 2-éthoxyéthyle.

14. Procédé pour revêtir un article métallique par une couche polymère pigmentée protectrice par polymérisation redox in situ, caractérisé en ce qu'il comprend l'opération d'immersion de l'article à revêtir dans une composition selon l'une quelconque des revendications précédentes pendant une durée suffisante pour l'autodéposition d'un revêtement d'épaisseur désirée sur la surface de l'article métallique.

15. Procédé selon la revendication 14, dans lequel on fait circuler la composition à travers une zone d'oxygénation séparée dans laquelle on injecte ou on fait barboter de l'oxygène moléculaire , le débit de circulation et l'alimentation en oxygène étant réglés de sorte que la composition ait une teneur constante en oxygène dissous d'au moins 4 ppm.

16. Procédé selon la revendication 14 ou la revendication 15, dans lequel la surface à revêtir est en matériau ferreux, éventuellement phosphaté.

## Patentansprüche

1. Saure wäßrige Zusammensetzung zur Beschichtung eines Metallgegenstandes mit einer pigmentierten polymeren Schutzschicht durch Redoxpolymerisation in situ, umfassend mindestens ein monofunktionelles Acrylmonomer, einen Initiator vom Peroxidtyp, eine Säure oder ein Salz zum Freisetzen von Metallionen aus der Oberfläche des Gegenstandes, ein Pigment und eine polymere Substanz, dadurch gekennzeichnet, daß die Zusammensetzung einen PH-Wert von 6 bis 0,5 und eine darin gelöste Menge an molekularem Sauerstoff hat, um als Polymerisationsinhibitor zu wirken, wobei die polymere Substanz mindestens ein ungesättigtes Präpolymer beinhaltet, das in der wäßrigen Lösung löslich oder dispergierbar ist, wobei das Präpolymer acrylische oder methacrylische Unsättigung in der Größenordnung von 0,05 bis 15 Äquivalente/kg des Präpolymers und eine oder mehrere Arten von kationischen funktionellen Gruppen hat, die aus der Gruppe, bestehend aus primären Amin-, sekundären Amin-, teriären Amin-, Ammonium-, Sulfonium- und Oxazolidingruppen und Mannichbasen ausgewählt sind, in Mengen der Größenordnung von 0,05 bis 10 Äquivalente/kg des Präpolymers, wobei das Präpolymer in einer Konzentration von 0,5 bis 25 Gew.-% bezogen auf das Gewicht der Zusammensetzung vorhanden ist.

2. Zusammensetzung nach Anspruch 1, worin das Präpolymer in Mengen der Größenordnung von 5 bis 15 Gew.-% bezogen auf das Gewicht der Zusammensetzung vorhanden ist.

3. Zusammensetzung nach einem der vorhergehenden Ansprüche, worin das Präpolymer eine weitere Art von funktioneller Gruppe aufweist, die aus der Gruppe, gebildet aus blockierten Isocyanaten, Epoxiden, Reihen von sikkativen Fettsäuren, Allylderivaten ausgewählt ist.

4. Zusammensetzung nach einem der vorhergehenden Ansprüche, worin das Pigment ein saures Pigment ist, das aus der Gruppe, gebildet aus Aluminiumsilikat, Kaolin, Silika, Glimmer, Titandioxid, Kohleschwarz, Eisenoxiden und Gemischen davon ausgewählt ist, und in Mengen der Größenordnung von 0,1 bis 20 Gew.-%, vorzugsweise von 1 bis 10 Gew.-% bezogen auf das Gewicht der Zusammensetzung vorhanden ist.

5. Zusammensetzung nach einem der vorhergehenden Ansprüche, worin der Peroxid-Initiator ein wasserlösliches organisches Peroxid ist.

6. Zusammensetzung nach Anspruch 5, worin der Peroxid-Initiator aus der Gruppe ausgewählt ist, die aus tert.-Butlyhydroperoxid, 2-Butanonperoxid und Cumolhydroperoxid besteht, in Konzentrationen von 0,05 bis 2 Gew.-% bezogen auf das Gewicht der Zusammensetzung.

7. Zusammensetzung nach einem der vorhergehenden Ansprüche, worin das wasserlösliche Acrylmonomer aus der Gruppe ausgewählt ist, die aus 2-Hydroxyethylacrylat, 2-Hydroxypropylacrylat, 3-Hydroxypropylacrylat, 4-Hydroxybutylacrylat, 5-Hydroxypentylacrylat, 6-Hydroxyhexylacrylat, 3-Propoxy-2-hydroxypropylacrylat und 3-Propionyloxy-2-hydroxypropylacrylat gebildet ist, in Konzentrationen von 0,5 bis 25 Gew.-% bezogen auf das Gewicht der Zusammensetzung.

8. Zusammensetzung nach einem der vorhergehenden Ansprüche, die ebenfalls ein quervernetzendes Comonomer enthält, das aus der Gruppe ausgewählt ist, die aus Butandioldiacrylat, Hexamethylendiacrylat, Tetramethylendiacrylat, Diacrylaten von Poly(ethylenglykol) gebildet ist, in Konzentrationen von 0,1 bis 5 Gew.-% bezogen auf das Gewicht der Zusammensetzung.

9. Zusammensetzung nach einem der vorhergehenden Ansprüche, dadurch gekennzeichnet, daß sie einen gelösten Gehalt an molekularem Sauerstoff von mindestens 4 ppm und bis zur Sättigung hat.

10. Zusammensetzung nach einem der vorhergehenden Ansprüche, worin die Metallionen freisetzende Säure aus der Gruppe aus Essigsäure, Acrylsäure, p-Toluolsulfonsäure, Schwefelsäure, Phosphorsäure, Ameisen-, Essig-, Propion-, Acryl-, Methacrylsäuren, Halbestern von Malein-, Fumar-, Bernstein-, Oxal- und Malonsäuren ausgewählt ist.

11. Zusammensetzung nach Anspruch 10, worin die Metallionen freisetzende Säure p-Toluolsulfonsäure in Konzentrationen von 0,01 bis 0,5 Gew.-% bezogen auf das Gewicht der Zusammensetzung ist.

12. Zusammensetzung nach einem der vorhergehenden Ansprüche, dadurch gekennzeichnet, daß sie einen pH-Wert von 2 bis 4 hat.

13. Zusammensetzung nach einem der vorhergehenden Ansprüche, worin sie auch ein Co-Lösungsmittel enthält, das aus der Gruppe ausgewählt ist, die Isopropanol, Butanol, 2-Ethylhexanol, 2-Ethoxyethanol, 2-Butoxyethanol und 2-Ethoxyethylacetat umfaßt.

14. Verfahren zur Beschichtung eines Metallgegenstandes mit einer pigmentierten polymeren Schutzschicht durch Redoxpolymerisation in situ, dadurch gekennzeichnet, daß es den Vorgang des Eintauchens des zu beschichtenden Gegenstandes in eine Zusammensetzung nach einem vorhergehenden Ansprüche umfaßt, für eine Zeit, die für die Selbstablagerung einer Beschichtung mit einer gewünschten Dicke auf der Oberfläche des Metallgegenstandes ausreichend ist.

15. Verfahren nach Anspruch 14, worin die Zusammensetzung durch eine abgetrennte Sauerstoffanreicherungs zone zirkuliert wird, in die molekularer Sauerstoff eingeblasen oder geperlt wird, wobei die Zirkulationsrate und der Sauerstoffeintrag so eingestellt werden, daß die Zusammensetzung einen konstanten Gehalt an gelöstem Sauerstoff von mindestens 4 ppm enthält.

16. Verfahren nach Anspruch 14 oder 15, worin die zu beschichtende Oberfläche aus eisenhaltigem, gegebenenfalls phosphatiertem Material ist.